# EUROPÄISCHE PATENTSCHRIFT

(11) **EP 1 729 326 B1**
(45) Veröffentlichungstag und Bekanntmachung des Hinweises auf die Patenterteilung: **29.06.2016**
(21) Anmeldenummer: 06010006.2
(22) Anmeldetag: 15.05.2006
(51) Int. Cl.: H01K 1/46, H01J 5/54

(54) **Lampensockel und Lampe**
Lamp base and lamp
Culot de lampe et lampe

(30) Priorität: 24.05.2005 DE 102005024435
(43) Veröffentlichungstag der Anmeldung: 06.12.2006
(73) Patentinhaber: Patent-Treuhand-Gesellschaft für elektrische Glühlampen mbH, 81543 München (DE)
(72) Erfinder: Helbig, Peter, 89567 Sontheim/Brenz (DE); Kantim, Uwe, 89520 Heidenheim (DE)
(74) Vertreter: Raiser, Franz

(56) Entgegenhaltungen:
- EP-A- 1 107 279
- EP-A- 1 255 273
- WO-A-03/030213
- WO-A-03/032365

## Beschreibung

Die Erfindung betrifft einen Lampensockel gemäß dem Oberbegriff des Patentanspruchs 1 und eine Lampe mit einem derartigen Sockel.

### I. Stand der Technik

Ein derartiger Lampensockel ist beispielsweise in der WO 03/032365 offenbart. Diese Druckschrift beschreibt eine Fahrzeugscheinwerferlampe mit einem Sockel, der ein Kunst-stoffsockelteil und einen daran fixierten, federnd ausgebildeten Metallring aufweist. Dieser Metallring besitzt drei angeformte, mit Widerhaken versehene Stege, die eine unlösbare Steckverbindung zwischen dem Metallring und dem Kunststoffsockelteil gewährleisten.

Die EP 1 255 273 A2 offenbart eine elektrische Lampe, deren Sockel aus einem ringförmigen, federnd ausgebildeten Metallteil zur Halterung des Lampengefäßes und einem mit mindestens einem hohlen Kontaktstift versehenen Kunststoffteil besteht. Eine aus dem Lampengefäß herausragende Stromzuführung ist in den hohlen Kontaktstift eingefädelt und mit diesem verschweißt, so dass das federnd ausgebildete Metallteil unter mechanischer Spannung steht.

### II. Darstellung der Erfindung

Es ist Aufgabe der Erfindung, einen gattungsgemäßen Lampensockel bereitzustellen der einen verbesserten Zusammenwirken des Kunststoffsockelteils und des daran fixierten, federnd ausgebildeten Metallrings ermöglicht.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Der erfindungsgemäße Lampensockel besitzt ein Kunststoffsockelteil und einen federnd ausgebildeten Metallring, der mittels am Metallring angeformter Stege am Kunststoffsockelteil fixiert ist, wobei die Stege erfindungsgemäß derart ausgebildet sind, dass zwischen den Stegen und dem Kunststoffsockelteil ein Klemmsitz besteht. Dadurch wird eine zuverlässige, spielfreie mechanische Fixierung des Metallrings im Kunststoffsockelteil gewährleistet.

Gemäß dem bevorzugten Ausführungsbeispiel der Erfindung schneiden die vorgenannten Stege zur Herstellung des Klemmsitzes in das Material des Kunststoffsockels, um dadurch eine einfache und zuverlässige Verankerung des Metallrings im Kunststoffsockelteil zu erreichen. Alternativ oder zusätzlich kann der Klemmsitz zwischen den Stegen des Metallrings und dem Kunststoffsockelteil durch ein Übermaß bei den Stegen oder bzw. und bei dem Kunststoffsockelteil bedingt bzw. verbessert sein. Beim Zusammenfügen von Metallring und Kunststoffsockelteil wird dadurch Material des Kunststoffsockelteils verdrängt oder gequetscht und eine spielfreie Fixierung der beiden vorgenannten Sockelteile aneinander gewährleistet.

Vorzugsweise wirken die Stege des Metallrings zur Herstellung des Klemmsitzes mit Vorsprüngen an einer Wand des Kunststoffsockelteils zusammen. Gemäß dem bevorzugten Ausführungsbeispiel der Erfindung schneiden die Stege in das Kunststoffmaterial dieser Vorsprünge, um eine spielfreie und sichere Verankerung des Metallrings im Kunststoffsockelteil zu erzielen. Alternativ oder zusätzlich kann der Klemmsitz zwischen den Stegen des Metallrings und den Vorsprüngen an der Wand des Kunststoffsockelteils durch an Übermaß bei den vorgenannten Stegen oder bzw. und Vorsprüngen bedingt sein oder verbessert werden. Beim Zusammenfügen von Metallring und Kunststoffsockelteil wird durch die Stege des Metallrings ein Teil des Kunststoffmaterials der Vorsprünge verdrängt oder gequetscht und dadurch mittels der Stege und Vorsprünge eine spielfreie Fixierung der beiden vorgenannten Sockelteile aneinander gewährleistet.

Die Stege des Metallrings sind vorzugsweise mit scharfkantigen Abschnitten versehen, um ein einfaches Eindringen in das Kunststoffmaterial des Kunststoffsockelteils zu ermöglichen.

Vorzugsweise sind die scharfkantigen Abschnitte der Stege abgewinkelt oder hakenförmig oder krallenartig ausgebildet, um eine sichere Verankerung in den Vorsprüngen an der Wand des Kunststoffsockelteils zu ermöglichen.

Gemäß dem bevorzugten Ausführungsbeispiel der Erfindung sind die Vorsprünge an der Wand des Kunststoffsockelteils jeweils zwischen zwei Stegen des Metallrings angeordnet, so dass die scharfkantigen Abschnitte dieser Stege jeweils in den zwischen ihnen angeordneten Vorsprung schneiden und sich dort verhaken bzw. verkrallen. Der Abstand zwischen den scharfkantigen Abschnitten dieser Stege ist kleiner als die Breite des zwischen ihnen angeordneten Vorsprungs.

Alternativ können die Stege des Metallrings auch jeweils zwischen zwei Vorsprüngen an der Wand des Kunststoffsockelteils angeordnet sein, so dass die scharfen Kanten des jeweiligen Stegs in die zu beiden Seiten dieses Stegs angeordneten Vorsprünge schneiden und die Stege sich dort verhaken oder verkrallen. In diesem Fall ist die Breite des scharfkantigen Stegabschnitts vorzugsweise größer als der Abstand zwischen den zu beiden Seiten dieses Stegs angeordneten Vorsprüngen an der Wand des Kunststoffsockelteils. Die Stege des Metallrings können hierzu beispielsweise die Form einer mit Widerhaken versehenen Pfeilspitze besitzen.

Als weitere Alternative kann ein Steg des Metallrings an einem Vorsprung an der Wand des Kunststoffsockelteils angeordnet sein, so dass eine oder mehrere scharfe Kanten auf einer Seite des Steges sich in die Vorsprünge am Sockel schneiden oder verklemmen, hierzu ist mindestens ein weiterer Steg mit der scharfen Kante auf der anderen Seite nötig um eine Verklemmung zu erreichen.

Der Klemmsitz kann aber bei den vorgenannten Alternativen auch ohne scharfkantige Abschnitte der Stege, nur durch eine Übermaßtoleranz zwischen Vorsprung und Steg erreicht werden. Beispielsweise kann jeweils ein Vorsprung des Kunststoffsockelteils zwischen zwei Stegen des Metallrings angeordnet sein, wobei der Klemmsitz dadurch erzielt wird, dass der Abstand zwischen den beiden Stegen geringfügig kleiner als die Breite des Vorsprungs ist.

Die an den Metallring angeformten Stege erstrecken sich vorteilhafterweise senkrecht zu seiner Ringfläche, um seine Lage bezüglich des Kunststoffsockelteils mittels der Stege festlegen zu können.

Gemäß dem bevorzugten Ausführungsbeispiel der Erfindung besitzt der Metallring senkrecht zu seiner Ringfläche wirkende Federelemente und liegt mit seiner Ringfläche auf einer Oberfläche des Kunststoffsockelteils auf, wobei die Oberfläche des Kunststoffsockelteils im Bereich der Federelemente Vertiefungen aufweist. Diese Vertiefungen bieten mehr Raum für die vorgenannten Federelemente zur Entfaltung ihrer Federwirkung senkrecht zur Ringebene.

Die Erfindung ist vorzugsweise für Metall-Kunststoffsockel von Glühlampen für Fahrzeuge vorgesehen, kann aber auch auf Sockel anderer Lampentypen angewandt werden.

### III. Beschreibung des bevorzugten Ausführungsbeispiels

Nachstehend wird die Erfindung anhand eines bevorzugten Ausführungsbeispiels näher erläutert. Es zeigen:
- Figur 1: Ein Kunststoffsockelteil eines Lampensockels mit daran fixierten, federnd ausgebildetem Metallring gemäß dem bevorzugten Ausführungsbeispiel der Erfindung
- Figur 2: Das Kunststoffsockelteil aus Figur 1 ohne den federnd ausgebildeten Metallring
- Figur 3: Den federnd ausgebildeten Metallring aus Figur 1 ohne das Kunststoffsockelteil
- Figur 4: Eine vergrößerte Darstellung der Stege des in Figur 3 abgebildeten Metallrings
- Figur 5: Eine Fahrzeuglampe mit dem in Figur 1 abgebildeten Kunststoffsockelteil und Metallring

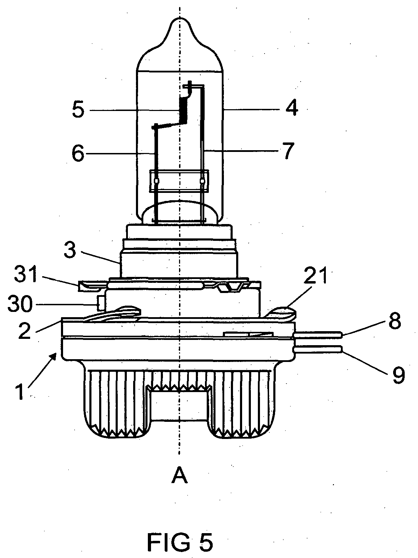

Bei der in Figur 5 abgebildeten, erfindungsgemäßen Lampe handelt es sich um eine Halogenglühlampe, die zum Einsatz in einen Kraftfahrzeugscheinwerfer vorgesehen ist. Diese Lampe besitzt ein gläsernes, im wesentlichen zylindrisches Lampengefäß 4 mit einer darin eingeschlossenen Glühwendel 5, deren Wendelachse parallel versetzt zur Längsachse A der Lampe bzw. zur Zylinderachse des Lampengefäßes 4 angeordnet ist. Zur Halterung und Spannungsversorgung der Glühwendeln 5 dienen zwei Stromzuführungen 6, 7, die aus dem sockelnahen Ende des Lampengefäßes 4 herausgeführt sind. Das sockelnahe Ende des Lampengefäßes 4 ist mit Klemmsitz in einer Aussparung eines metallischen Lampensockelteils 3 verankert. Das andere Ende des gläsernen Lampengefäßes 4 ist mit einer lichtundurchlässigen Beschichtung versehen. Das metallische Lampensockelteil 3 und ein federnd ausgebildeter Metallring 2 sind jeweils an einem Kunststoffsockelteil 1 fixiert. Aus dem Kunststoffsockelteil 1 ragen seitlich zwei als metallische Kontaktfahnen 8, 9 ausgebildete elektrische Anschlüsse der Fahrzeuglampe heraus, die jeweils elektrisch leitend mit einer der Stromzuführungen 6, 7 verbunden sind. Das metallische Lampensockelteil 3 ist mit drei Referenznasen 31 ausgestattet, die sich in einer Ebene senkrecht zur Längsachse A der Lampe erstrecken und zur Montage der Lampe in der Halterung eines Fahrzeugscheinwerfers mit drei Federelementen 21, 22, 23 zusammenwirken. Die drei Federelemente 21, 22, 23 entfalten eine Federwirkung in Richtung der Längsachse A der Lampe, so dass die Halterung oder Fassung des Fahrzeugscheinwerfers nach der Montage der Lampe mit Klemmsitz zwischen den Referenznasen 31 und den Federelementen 21, 22, 23 angeordnet ist, wobei, durch die Gestalt und Anordnung der drei Referenznasen 31 im Zusammenspiel mit der vorgenannten Halterung eine Ausrichtung der Glühwendel 4 bzgl. der optischen Achse des Scheinwerfers gewährleistet wird. Das metallische Lampensockelteil 3 ist ferner mit einer seitlichen Andruckfeder 30 versehen, die eine Federwirkung senkrecht zur Längsachse A entfaltet und damit eine seitliche Fixierung der Lampe in der Halterung gewährleistet.

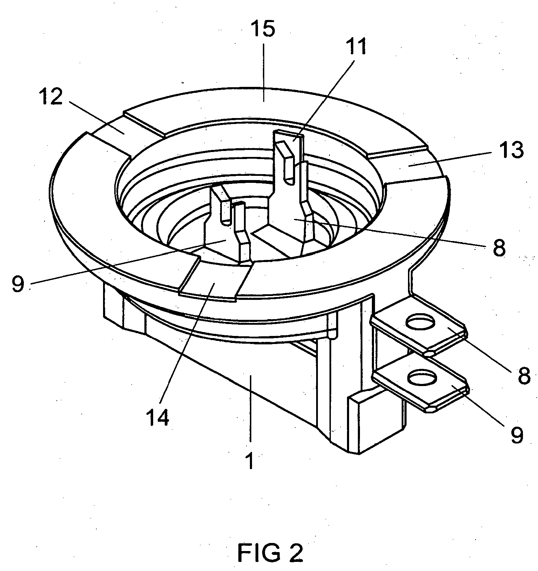

In Figur 2 ist das Kunststoffsockelteil 1 der in Figur 5 abgebildeten Fahrzeuglampe dargestellt. In dem Kunststoffsockelteil 1 sind die elektrischen Anschlüssen 8, 9 eingebettet, die als metallische Kontaktfahnen ausgebildet sind und deren in den Sockel hineinragende Enden jeweils mit einer der Stromzuführungen 6 bzw. 7 verschweißt sind. Die aus dem Sockel herausragenden Kontaktflächen der Kontaktfahnen 8, 9 sind jeweils mit einem kreisscheibenförmigen Durchbruch versehen. Das Kunststoffsockelteil 1 ist im wesentlichen topfartig ausgebildet und weist eine ringförmige Auflagefläche 15 für den Metallring 2 auf, die im Bereich der Federelemente 21, 22, 23 des Metallrings 2 durch drei Vertiefungen 12, 13, 14 unterbrochen ist. Die Innenwand des Kunststoffsockelteils 1 ist mit drei äquidistant angeordneten, stegförmigen Vorsprüngen 11 ausgestattet, die zur Fixierung des Metallrings 2 dienen.

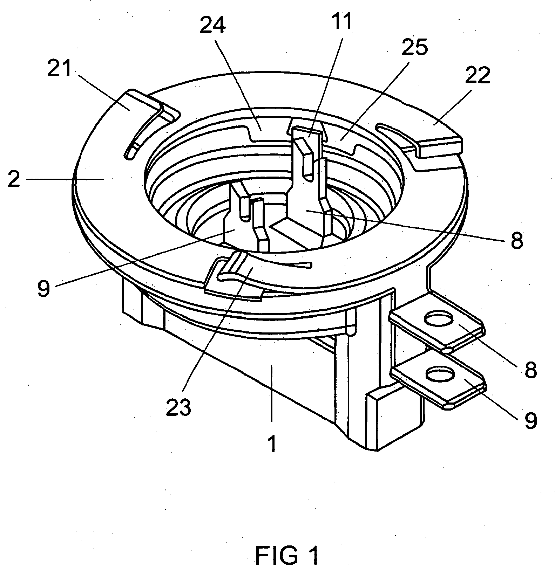

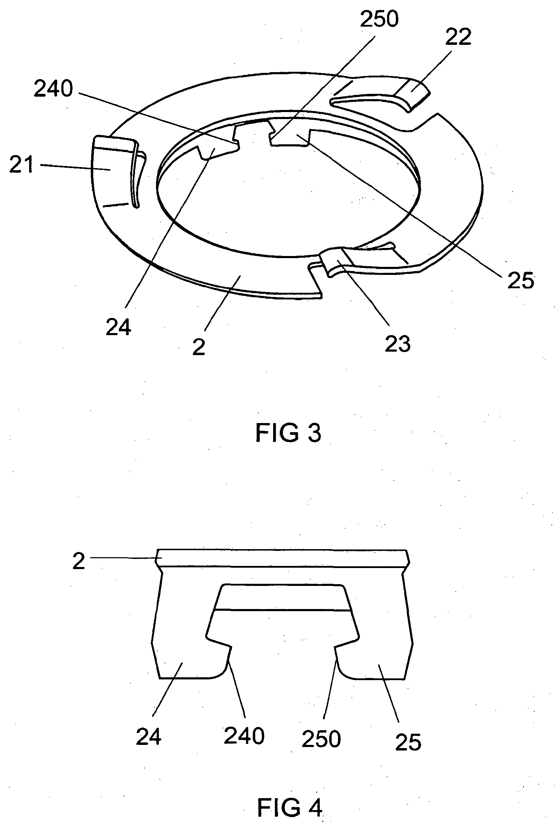

In Figur 3 ist der federnd ausgebildete Metallring 2 dargestellt. Der Metallring 2 besitzt drei äquidistant entlang seines äußeren Ringumfangs angeordnete Federelemente 21, 22, 23, deren freie Enden aus der Ringebene herausragen und die eine Federwirkung senkrecht zur Ringebene bzw. Ringfläche entfalten. Außerdem besitzt der Metallring 2 drei Paare von Stegen 24, 25, die sich senkrecht zur Ringebene bzw. Ringfläche erstrecken und äquidistant entlang des inneren Ringumfangs angeordnet und am Metallring 2 angeformt sind. Die Endabschnitte 240 bzw. 250 der Metallstege 24 bzw. 25 sind scharfkantig und hakenförmig ausgebildet. Figur 4 zeigt vergrößert einen Ausschnitt des Metallrings 2 aus Figur 3, und insbesondere Details der Stege 24, 25. Die Endabschnitte 240, 250 der Stege 24, 25 wirken mit einem Vorsprung 11 zusammen, um den Metallring 2 am Kunststoffsockelteil 1 zu fixieren. Zwischen jedem Paar von Stegen 24, 25 ist jeweils ein Vorsprung 11 mit Klemmsitz angeordnet. Der Abstand zwischen den scharfkantigen, hakenförmigen Endabschnitten 240, 250 eines Stegpaares 24, 25 ist kleiner als die Breite des entsprechenden Vorsprungs 11, so dass die scharfkantigen, hakenförmigen Endabschnitte 240, 250 bei der Montage des Metallrings 2 auf dem Kunststoffsockelsteil 1 in das Kunststoffmaterial des Vorsprungs 11 schneiden und sich dort verhaken. In Figur 1 sind das Kunststoffsockelteil 1 mit dem darauf montierten Metallring 2 sowie das Zusammenwirken der Metallstege 24, 25 mit einem Vorsprung 11 an der Innenwand des Kunststoffsockelteils 1 schematisch dargestellt. Die drei Paare von Metallstegen 24, 25 liegen an der Innenwand des Kunststoffsockelteils 1 an.

Die Erfindung beschränkt sich nicht auf das oben näher erläuterte Ausführungsbeispiel. Beispielsweise kann der Metallring 2 auch nur ein Paar von Stegen 24, 25 oder mehr als drei Paare von Stegen 24, 25 besitzen. Außerdem müssen die Stege 24, 25 nicht unbedingt an der Innenwand des Kunststoffsockelteils 1 anliegen oder äquidistant angeordnet sein. Die Erfindung kann ferner auch auf beliebige andere Lampen angewandt werden, die einen Metall-Kunststoffsockel besitzen.

## Patentansprüche

1. Lampensockel mit einem Kunststoffsockelteil (1) und einem federnd ausgebildeten Metallring (2), der mittels am Metallring (2) angeformter Stege (24, 25) am Kunststoffsockelteil (1) fixiert ist, **dadurch gekennzeichnet, dass** die Stege (24, 25) zur Herstellung eines Klemmsitzes mit dem Kunststoffteil (1) mit Vorsprüngen (11) an einer Wand des Kunststoffsockelteils (1) zusammenwirken, wobei die Stege (24, 25) scharfkantige Abschnitte (240, 250) aufweisen, die abgewinkelt oder hakenförmig oder krallenartig ausgebildet sind, und die Stege (24, 25) in das Material der Vorsprünge (11) schneiden.

2. Lampensockel nach Anspruch 1, **dadurch gekennzeichnet, dass** der Klemmsitz zwischen den Stegen (24, 25) und Vorsprüngen (11) durch ein Übermaß bei den Stegen (24, 25) oder bzw. und den Vorsprüngen (11) bedingt ist.

3. Lampensockel nach Anspruch 1 oder 2, **dadurch gekennzeichnet, dass** die Stege (24, 25) sich senkrecht zur Ringfläche des Metallrings (2) erstrecken.

4. Lampe mit einem Lampensockel gemäß einem oder mehreren der Ansprüche 1 bis 3.

## Claims

1. Lamp base having a plastic base part (1) and a metal ring (2) which is designed to be springy and is fixed to the plastic base part (1) by means of webs (24, 25) integrally formed on the metal ring (2), **characterized in that** in order to produce a clamping fit with the plastic part (1), the webs (24, 25) interact with projections (11) on a wall of the plastic base part (1), the webs (24, 25) having sharp-edged sections (240, 250) which are designed to be angled over or hook-like or claw-like, and the webs (24, 25) cut into the material of the projections (11).

2. Lamp base according to Claim 1, **characterized in that** the clamping fit between the webs (24, 25) and projections (11) is caused by over-dimensioning of the webs (24, 25) and/or the projections (11).

3. Lamp base according to Claim 1 or 2, **characterized in that** the webs (24, 25) extend at right angles to the annular surface of the metal ring (2).

4. Lamp having a lamp base according to one or more of Claims 1 to 3.

## Revendications

1. Culot de lampe comprenant une partie de culot en plastique (1) et une bague métallique (2) conçue pour être élastique, qui est fixée sur la partie de culot en plastique (1) au moyen d'arêtes (24, 25) formées sur la bague métallique (2), **caractérisé en ce que** les arêtes (24, 25) coopèrent avec des saillies (11) sur une paroi de la partie de culot en plastique (1) pour créer un ajustement serré avec la partie en plastique (1), les arêtes (24, 25) présentant des parties (240, 250) à angles vifs qui sont conçues coudées ou en forme de crochet ou en forme de griffe et les arêtes (24, 25) taillant dans le matériau des saillies (11).

2. Culot de lampe selon la revendication 1, **caractérisé en ce que** l'ajustement serré entre les arêtes (24, 25) et les saillies (11) est dû à une surmesure au niveau des arêtes (24, 25) ou/et des saillies (11).

3. Culot de lampe selon la revendication 1 ou 2, **caractérisé en ce que** les arêtes (24, 25) s'étendent perpendiculairement à la surface annulaire de la bague métallique (2).

4. Lampe pourvue d'un culot de lampe selon une ou plusieurs des revendications 1 à 3.
